# EUROPÄISCHE PATENTSCHRIFT

(11) **EP 1 114 559 B1**
(45) Veröffentlichungstag und Bekanntmachung des Hinweises auf die Patenterteilung: **01.08.2007**
(21) Anmeldenummer: 99953675.8
(22) Anmeldetag: 01.09.1999
(51) Int. Cl.: H04Q 3/00

(54) **VERFAHREN ZUR STEUERUNG EINER VORFELDEINRICHTUNG**
METHOD FOR CONTROLLING A REMOTE SWITCHING UNIT
PROCEDE DE COMMANDE D'UNE UNITE DE COMMUTATION DISTANTE

(30) Priorität: 16.09.1998 DE 19842448
(43) Veröffentlichungstag der Anmeldung: 11.07.2001
(73) Patentinhaber: SIEMENS AKTIENGESELLSCHAFT, 80333 München (DE)
(72) Erfinder: SCHMELZER, Alwin, D-81477 München (DE)
(86) Internationale Anmeldenummer: PCT/DE1999/002762
(87) Internationale Veröffentlichungsnummer: WO 2000/016565

(56) Entgegenhaltungen:
- EP-A- 0 592 153
- EP-A- 0 840 530

## Beschreibung

Die Erfindung betrifft ein Verfahren zur Steuerung einer Vorfeldeinrichtung, welche zumindest im störungsfreien Betrieb über eine Anschlußverbindung an eine Muttervermittlung eines Telekommunikationsnetzes als vorgeschaltete Einrichtung zur Anbindung von Endanschlüssen des Netzes angeschlossen ist und welche über zumindest eine Querstrecke mit zumindest einer Lokalvermittlung verbunden ist.

Vorfeldeinrichtungen ('remote switching units') werden als Anschlußgruppe für die Endteilnehmer eines lokalen Einzugsbereiches eines Telekommunikationsnetzes, insbesondere eines Telefonnetzes, verwendet und übernehmen dort die Funktionen der früher verwendeten Kleinst- oder Endvermittlungen, deren Vermittlungsfunktionen im Zuge der Umstellung auf digitale Telekommunikationsnetze in Zentralvermittlungen zusammengezogen wurden. Eine Vorfeldeinrichtung ist mit der ihr zugeordneten Zentralvermittlung, die unter anderem als Muttervermittlung ('host switch') der Steuerung der Vorfeldeinrichtung dient, über eine Anschlußverbindung ('remote switch trunk') verbunden. Die Herstellung der Verbindungen für die über die Vorfeldeinrichtung angeschlossenen Teilnehmer sowie die Steuerung der Vermittlungsaufgaben der Vorfeldeinrichtung erfolgt durch die Muttervermittlung über die Anschlußverbindung.

Wie aus dem bisher Gesagten folgt, laufen sämtliche Telekommunikationsprozesse und -verbindungen der Vorfeldeinrichtung gewöhnlicherweise über ihre Muttervermittlung. Dies trifft im besonderen für jene Verbindungen zu, die aus dem Teilnehmerkreis der Vorfeldeinrichtung hinausführen, z.B. weil der andere Teilnehmer einem über eine andere Vermittlung angeschlossenen Wählkreis oder überhaupt einem anderen Telekommunikationsnetz angehört. Aus Sicherheitsgründen wird darüber hinaus eine Vorfeldeinrichtung dahingehend ausgelegt, für die an sie angeschlossenen Teilnehmer auch selbständig Vermittlungsaufgaben durchzuführen. Auf diese Weise kann im Falle einer Störung der Anschlußverbindung zu der Mutterstelle - oder allgemeiner irgendeiner Steuerungsstörung, welche die Steuerung der Vorfeldeinrichtung durch die Muttervermittlung vereitelt - zumindest lokal ein Telekommunikationsbetrieb aufrechterhalten bleiben. Zusätzlich wird eine Vorfeldeinrichtung über eine oder mehrere sogenannte 'Backdoor Trunks' oder Querstrecken mit anderen lokalen Vermittlungen verbunden; diese Lokalvermittlungen gehören zumeist einem anderen Telekommunikationsnetz, z.B. dem Netz eines anderen Betreibers, an. Sinn dieser Querstrecken ist es, auch im Falle eines Zusammenbruchs der Anschlußverbindung oder der Mutterstelle die Herstellung gewisser Dienste wie z.B. einer Notrufnummer oder eines Informationsdienstes zu gestatten; dies erfolgt eben über Umgehungswege unter Verwendung der Querstrecken.

Die Querstrecken sind während des normalen Betriebes der Vorfeldeinrichtung und Muttervermittlung im Ruhezustand oder Bereitschaftsbetrieb; erst im Falle, daß die Vorfeldeinrichtung von der Verbindung und/oder Steuerung der Mutterstelle abgeschnitten wird, werden die Querstrecken aktiviert. Bei der Signalisierung über die Querstrecke verhält sich die Vorfeldeinrichtung gegenüber den Lokalvermittlungen nach Art einer Vermittlungsstelle.

Die Vermittlungsstellen eines Telekommunikationsnetzes oder Telekommunikationsnetzverbundes kommunizieren untereinander mittels spezifischer Zwischenamtssignale zur Steuerung und Überwachung der Vermittlungsvorgänge sowie der ausgeführten Dienste und zur Verwaltung der Verbindungen und Verbindungsleitungen. Für digitale Telekommunikationssysteme ist es bekannt, Zwischenamtssignale in Form von Signalisierungsnachrichten auszutauschen, die zwischen den Vermittlungsstellen über sogenannte Zentralkanäle, d.s. eigene, von den Nutzkanälen unterschiedene Kanäle, ausgetauscht werden und deren Form von dem jeweils verwendeten Protokoll abhängt.

Ein Beispiel eines solchen Zentralkanalsystems ist das sogenannte Signalisierungssystem Nr. 7 oder kurz CCS7 ('Common Channel Signaling system no. 7') nach den Normen Q.700 bis Q.716 der Internationalen Telekommunikationsunion (ITU). Im CCS7-System erfolgt der Austausch der Signalisierungsnachrichten über für diesen Zweck eigens vorgesehene Signalisierungsstrecken. Eine Vermittlungsstelle wird mit einer sogenannten Signalisierungsstelle ('Signaling Point') zur Durchführung der Signalisierungsaufgaben im CCS7-System ausgestattet. Die Signalisierungsstellen sind über die Signalisierungsstrecken zu einem sogenannten Zentralkanalnetz vernetzt, wobei jeder Signalisierungsstelle ein Stellencode (SPC, 'Signaling Point Code') zur eindeutigen Kennzeichnung und Adressierung innerhalb des Zentralkanalnetzes zugeordnet ist. Eine Signalisierungsstrecke ist hierbei gewöhnlich Teil einer Nutzstrecke zwischen zwei Vermittlungsstellen oder verläuft zumindest mit einer Nutzstrecke parallel, d.h. verbindet dieselben Vermittlungsstellen. Die Signalisierungsnachrichten können hierbei nicht nur in der sogenannten assoziierten Signalisierung zwischen einer Ursprungs- und einer Ziel-Signalisierungsstellen, die über eine Signalisierungsstrecke direkt verbunden sind, ausgetauscht werden, sondern es kann die Signalisierung als sogenannte quasi-assoziierte Signalisierung auch über andere, als Zwischenknoten fungierende Signalisierungsstellen erfolgen.

In der funktionellen Architektur einer Signalisierungsstelle sind die Signalisierungsfunktionen auf eine sogenannte Nachrichtenübertragungseinrichtung einerseits und auf darauf aufbauende Anwenderteile andererseits verteilt. Eine Nachrichtenübertragungseinrichtung, wie z.B. das sogenannte MTP ('Message Transfer Part') des CCS7-Systems, ist ein anwenderunabhängiges Transportsystem, welches dem Nachrichtenaustausch im Zentralkanalsystem dient. Als solches bietet es einen für alle Signalisierungsarten, die im Zentralkanalsystem verwendet werden können, einheitlichen Transportrahmen, in den die eigentliche Nutzinformation der Zwischenamtsignalisierung eingebettet wird. Die Anwendungsteile dagegen beinhalten die anwendungsbezogenen Funktionen des Zentralkanalsystems, welche der Verarbeitung der Nutzinformation der Zwischenamtsignalisierung dienen und für das betrachtete Telekommunikationsnetz bzw. den betrachteten Telekommunikationsdienst zumindest zum Teil spezifisch sind; Beispiele im CCS7-System sind etwa der Fernsprech-Benutzerteil (TUP, Telephone User Part') und der ISDN-Benutzerteil (ISUP, 'ISDN User Part').

Aus der EP 0840530 ist ein Verfahren zur Rufbehandlung in einem Kommunikationsnetzwerk, bei dem eine mehrere Knoten aufweisende Vermittlungseinrichtung über je Knoten vorhandene Verbindungsstrecken mit einer Nachbar-Vermittlungseinrichtung verbunden ist, bekannt, wobei eine Gruppe von Pointcodes einem SPC zuordenbar sind.

Aus der EP 0592153 ist ein Telekommunikationssystem mit redundanten, unterschiedlichen SS7 Signalisierungs-Schnittstellen bekannt, bei dem zumindest eine Schnittstelle STP (Signaling Transfer Point) - Eigenschaften hat und mit der Muttervermittlung (host) lose gekoppelt ist.

Es ist Aufgabe der Erfindung, die Steuerung der Nutzstrecken im Steuerungsstörfall automatisch an die Vorfeldeinrichtung zu übergeben und somit eine Störung der Muttervermittlung beziehungsweise der Anschlussverbindung zu umgehen.

Diese Aufgabe wird durch das eingangs umrissene Verfahren mit den Merkmalen des Anspruchs 1 gelöst.

Die erfindungsgemäße Lösung ermöglicht die Verwendung einer Zentralkanalsignalisierung, insbesondere nach dem CCS7-System, für die Realisierung von Querstrecken, ohne eine gesamte Signalisierungsstelle in der Vorfeldeinrichtung einrichten zu müssen. So etwa müssen in der Vorfeldeinrichtung keine zusätzlichen Anwenderteile eingerichtet werden; andererseits reicht das Protokoll der Nachrichtenübertragungseinrichtung, z.B. das CCS7-Protokoll, ohne jegliche Erweiterung aus und kann ohne weiteres den Signalisierungsaustausch mit den Lokalvermittlungen übernehmen. Im übrigen können die Lokalvermittlungen sowohl Netzknoten des eigenen Netzes, z.B. eine andere Vorfeldeinrichtung, als auch eines anderen Telekommunikationsnetzes sein.

Wie aus der obigen Formulierung hervorgeht, können eine oder mehrere Lokalvermittlungen angebunden werden sowie seitens der Vorfeldeinrichtung eine oder mehrere Querstrecken bzw. eine oder mehrere Signalisierungsstrecken vorgesehen sein. Wenn im folgenden der Kürze halber, und ebenso in den Ansprüchen, von "Lokalvermittlungen", "Signalisierungsstrecken" bzw. "Querstrecken" die Rede ist, so soll stets auch der Fall eingeschlossen sein, daß nur eine Lokalvermittlung, eine Signalisierungsstrecke bzw. eine Querstrecke vorliegt.

In einer erfindungsgemäßen Vorfeldeinrichtung ist die Nachrichtenübertragungseinrichtung im ungestörten Betrieb der Muttervermittlung bzw. der Anschlußverbindung im Bereitschafts- oder Ruhezustand, da in diesem Falle die gesamte Zwischenamtsignalisierung ohnedies über die Mutterstelle erfolgt.

Es ist zudem günstig, wenn die Vorfeldeinrichtung mit Lokalvermittlungen außerhalb des Telekommunikationsnetzes verbindbar ist, nämlich zu einem anderen Telekommunikationsnetz, um den Netzteilnehmern die angebotenen Telekommunikationsdienste zumindest zum Teil über ein Partnernetz anzubieten.

Das erfindungsgemäße Verfahren erreicht einen "reibungslosen" Übergang zum von der Mutterstelle unabhängigen Betrieb im Störungsfall dadurch, daß von der Vorfeldeinrichtung
- aufgrund der Störung der Muttervermittlung und/oder der Anschlußverbindung die Nachrichtenübertragungseinrichtung selbständig in Betrieb gesetzt wird,
- die den Querstrecken zugeordneten Signalisierungsstrecken für den Austausch von Signalisierungsnachrichten gemäß dem Protokoll des Zentralkanalsystems aktiviert werden, sowie
- für ihre Endanschlüsse die Aufgaben einer Vermittlung mit einem eigenen Stellencode gegenüber den über die zugehörenden Querstrecken verbundenen Lokalvermittlungen ausgeführt werden.

Es ist des weiteren günstig, wenn aufgrund der Aktivierung einer Signalisierungsstrecke zwischen der Vorfeldeinrichtung und einer Lokalvermittlung seitens der Lokalvermittlung die den Stellencode der Vorfeldeinrichtung betreffende Signalisierung auf die Querstrecke umgeschaltet wird. Dies erfolgt günstigerweise durch Einräumung einer höchsten Priorität seitens der Lokalvermittlung für die Querstrecke.

Zudem ist es vorteilhaft, wenn seitens der Nachrichtenübertragungseinrichtung ein verringerter Funktionensatz der Signalisierungsnetzebene zur Durchführung assoziierter Signalisierung verwendet wird. Da lediglich die Signalisierung zu den über die Querstrecken verbundenen Lokalvermittlungen zur Realisierung des Telekommunikationsdienstes im Steuerungsstörungsfall erforderlich ist, ist auf diese Weise eine Aufwandsverringerung bei der Realisierung und Instandhaltung der Nachrichtenübertragungseinrichtung erreichbar.

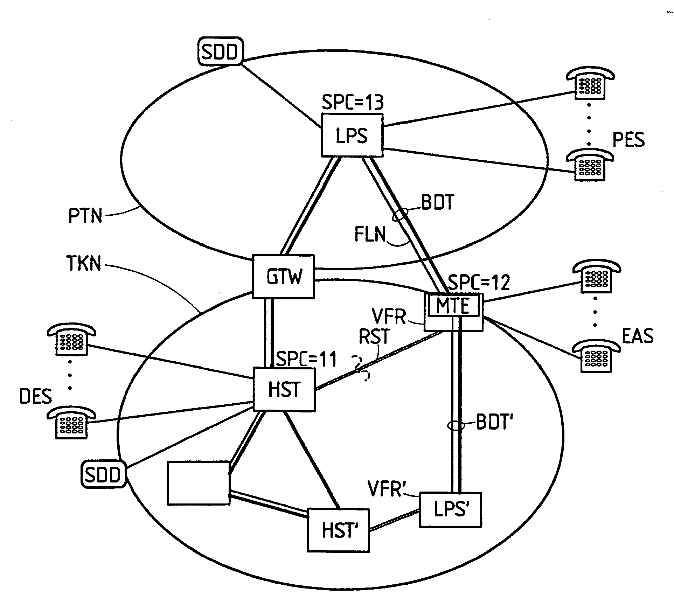

Die Erfindung wird im folgenden anhand eines Ausführungsbeispieles näher erläutert, wobei die beigefügte Zeichnung herangezogen wird. Diese zeigt, soweit für die Darstellung der Erfindung anhand dieses Ausführungsbeispieles von Belang, eine schematische Übersicht über die Komponenten eines Telefonnetzes mit Signalisierung auf der Grundlage des bereits erwähnten CCS7-Systems.

Es sei an dieser Stelle darauf hingewiesen, daß die Erfindung sich nicht allein auf CCS7-Systeme bezieht, sondern überhaupt auf Zentralkanalsysteme anwendbar ist, und hierbei insbesondere auf Zentralkanalsysteme digitaler Telekommunikationsnetze. Unter einem Zentralkanalsystem wird hier ein Signalisierungssystem verstanden, welches eine von Nutzkanälen zumindest logisch getrennte Zwischenamtsignalisierung aufweist. Für die Erfindung ist es hierbei von untergeordneter Bedeutung, ob die für die Zwischenamtsignalisierung vorgesehenen Signalisierungsstrecken von den Nutzverbindungsstrecken unterschiedlich sind oder sogar ein eigenes Signalisierungsnetz bilden. Auch ist es belanglos, ob die Signalisierungsstrecken beispielsweise mittels eigener physikalischer Anschlüsse realisiert sind oder etwa als Teil einer Zwischenschnittstelle mit Nutzkanälen, von denen bestimmte Kanäle permanent oder vorübergehend als Signalisierungskanäle genutzt sind.

In der Figur ist eine Muttervermittlungsstelle HST eines Telefonnetzes TKN gezeigt, an welche über eine Anschlußverbindung RST eine Vorfeldeinrichtung VFR angeschlossen ist. Die Vorfeldvermittlung VFR kann an die Stelle einer früheren Ortsvermittlung getreten sein und versorgt nun die Endanschlüsse EAS dieses Ortswählkreises. Andere Telefonteilnehmer des Netzes TKN sind z.B. über direkte Endanschlüsse DES an die Muttervermittlung HST angeschlossen. Des weiteren sind in der Figur den Netzknoten zugeordnete, beispielhafte Stellencodes SPC gezeigt. So ist der Muttervermittlung HST z.B. ein Stellencode 11 zugeordnet.

Die Muttervermittlung HST ist mit anderen Vermittlungsstellen HST' des Netzes TKN vernetzt. Des weiteren besteht über ein sogenanntes Gateway GTW Zugang zu einem Partnernetz, z.B. einem Telefonnetz eines anderen Betreibers. Auf seiten des Partnernetzes PTN ist in der Figur eine Vermittlung LPS gezeigt, welche die Anschlüsse PES der Teilnehmer eines Wählkreises des Partnernetzes bedient. Es sei angenommen, daß dieser "Lokalwählkreis" des Partnernetzes mit dem Ortskreis der Vorfeldeinrichtung VFR geographisch überlappend oder benachbart ist. Selbstverständlich ist der Lokalvermittlung LPS ein eigener Stellencode zugeteilt, z.B. wie in der Figur der Stellencode 13.

Wird beispielsweise von einem der "Ortskreis-Teilnehmer" EAS eine Gesprächsverbindung zu einem Teilnehmer PES des Partnernetz-Wählkreises gewünscht, signalisiert dies die Vorfeldeinrichtung VFR an die Mutterstelle HST, die eine Verbindung über das Gateway GTW und die Lokalvermittlung LPS zu dem gewünschten Teilnehmer des Partnernetzes PTN herstellt und zum Ortskreis-Teilnehmer über die Vorfeldeinrichtung VFR durchverbindet. Die Verbindungsführung über die Muttervermittlung HST erfolgt deshalb, weil dort die für den Aufbau, Erhalt, Abbau und Überwachung einschließlich der Vergebührung nötigen Funktionen lokalisiert sind, während die Vorfeldeinrichtung VFR - zumindest im Normalbetrieb - primär als Anschlußknoten für die Ortskreis-Teilnehmer EAS dient. Dies ist auch der Grund dafür, daß wie oben erwähnt der Stellencode der Vorfeldeinrichtung VFR an die Mutterstelle HST übertragen wird.

Es sei darauf hingewiesen, daß die Bezeichnungen "Lokalwählkreis" oder "Lokalvermittlung" lediglich im Hinblick auf das Ausführungsbeispiel gewählt sind und sich nicht auf den Einzugsbereich der Vermittlung LPS des Partnernetzes beziehen; vielmehr bezeichnet "lokal" hier die besondere Beziehung zur Vorfeldeinrichtung VFR, zu der die Lokalvermittlungen durch die im folgenden erläuterten Querstrecken in eine zumindest gedachte Nachbarschaftsbeziehung gerückt sind. Dies ist unabhängig davon zu sehen, daß z.B. aus Gründen der Wirtschaftlichkeit oft Querstrecken gerade zwischen hinsichtlich ihres Standorts oder Einzugsbereiches benachbarte Netzknoten gezogen werden.

Im Falle einer Steuerungsstörung, bei welcher wie in der Figur durch eine Wellenlinie symbolisiert die Vorfeldeinrichtung VFR von der Steuerung durch die Mutterstelle HST abgeschnitten wird, z.B. bei einem Kabelbruch in der Anschlußverbindung RST, soll nun die Vorfeldeinrichtung VFR für ihre Teilnehmer EAS einen Notbetrieb aufrechterhalten. Zweck dieses Notbetriebs ist insbesondere, Sonderdienste SDD wie z.B. einen Notruf zur Feuerwehr oder einen Informationsdienst den Ortskreis-Teilnehmern EAS weiterhin anzubieten. Im Normalbetrieb wären diese Dienste über die Mutterstelle oder einen anderen Netzknoten des eigenen Netzes TKN erreichbar; durch die Störungssituation ist dieser Weg ja nicht möglich. Als "Ersatzweg" ist eine Querstrecke BDT zu der Lokalvermittlung LPS vorgesehen, über die die Vorfeldeinrichtung VFR im Falle einer Steuerungsstörung zumindest zu den Sonderdiensten SDD des Partnernetzes Zugang hat.

Gemäß der Erfindung ist für den Fall einer Steuerungsstörung eine Nachrichtenübertragungseinrichtung MTE auf seiten der Vorfeldeinrichtung VFR vorgesehen, welche während des Normalbetriebes in einem Bereitschaftszustand ist und erst beim Eintreten der Störungssituation aktiviert wird. Die Störung wird auf bekannte Weise erkannt, sobald der Austausch von Steuernachrichten mit der Mutterstelle HST über die Anschlußverbindung RST zusammenbricht; aufgrund dessen aktiviert die Vorfeldeinrichtung VFR automatisch und selbständig, also ohne eine Signalisierung mit anderen Vermittlungsstellen, die Nachrichtenübertragungseinrichtung MTE. Diese führt nach ihrer Inbetriebnahme den Austausch von Signalisierungsnachrichten mit der Lokalvermittlung LPS durch. Hierzu ist in der Querstrecke BDT ein sogenanntes F-Link FLN eingerichtet, welches als Signalisierungsstrecke der assoziierten Signalisierung zwischen der Vorfeldeinrichtung VFR und der Lokalvermittlung LPS dient.

Im allgemeinen kann die Anzahl der von der betrachteten Vorfeldeinrichtung VFR aus bestehenden Querstrecken jeden beliebigen Wert von eins aufwärts annehmen. Neben einem Netzknoten eines anderen Telekommunikationsnetzes, wie etwa der Vermittlung LPS eines Partnertelefonnetzes PTN, kann z.B. auch eine andere Vermittlungsstelle des eigenen Netzes TKN über eine Querstrecke als Lokalvermittlung mit der betrachteten Vorfeldeinrichtung VFR verbunden sein. Eine weitere Möglichkeit ist nicht zuletzt jene, bei der eine andere Vorfeldeinrichtung VFR' über eine Querstrecke BDT' angebunden ist; diese kann dem eigenen oder einem fremden Netz angehören. Eine über eine Querstrecke BDT' angebundene und somit als Lokalvermittlung LPS' dienende Vorfeldeinrichtung VFR' ist günstigerweise einer anderen Vermittlungsstelle HST' als der Mutterstelle HST zugeordnet, wie dies in der Figur angedeutet ist.

Bei einer Steuerungsstörung aktiviert somit die Vorfeldeinrichtung VFR die Nachrichtenübertragungseinrichtung MTE und ebenso die F-Links FLN der Querstrecken BDT,BDT' für den Austausch von Signalisierungsnachrichten des CCS7-Systems. Unter Verwendung der Nachrichtenübertragungseinrichtung MTE führt die Vorfeldeinrichtung VFR nun für die Dauer der Störung für die Ortskreis-Endanschlüsse EAS die Aufgaben einer Vermittlung mit einem eigenen Stellencode SPC gegenüber den Lokalvermittlungen LPS' aus.

Für die eigenständige Signalisierung erhält die Vorfeldeinrichtung VFR einen eigenen Stellencode, z.B. in der Figur einen Stellencode 12. Im Normalbetrieb wird die Zwischenamtsignalisierung für diesen Stellencode zu der Mutterstelle HST geleitet. Somit wird erfindungsgemäß auch der Muttervermittlung HST der Stellencode 12 der Vorfeldeinrichtung VFR zugeteilt, sodaß die Mutterstelle durch ihren eigenen Stellencode 11 und den der Vorfeldeinrichtung VFR adressierbar ist. Zusätzlich wird auf seiten der Lokalvermittlungen LPS,LPS' den Querstrecken BDT,BDT' z.B. die höchste Priorität eingeräumt, jedenfalls aber eine höhere Priorität als jene der Signalisierungsverbindungen, die zu der Muttervermittlung HST führen.

Durch die Verwendung mehrerer Stellencodes 11,12 in der Muttervermittlung HST und die Priorisierung der Querstrecken seitens der Lokalvermittlungen LPS,LPS' wird es möglich, die Steuerung der Nutzstrecken im Steuerungsstörungsfall automatisch an die Vorfeldeinrichtung VFR zu übergeben und bei Wiederherstellung des Normalbetriebes eine Rückgabe an die Mutterstelle HST durchzuführen. Im Normalbetrieb sind die Querstrecken BDT,BDT' inaktiv, und die Signalisierung wird der Mutterstelle zugeleitet. Sobald die Querstrecken BDT,BDT' durch die Vorfeldeinrichtung VFR aktiviert werden, wird dies seitens der Lokalvermittlungen LPS,LPS' nach bekannter Art erkannt; aufgrund der hohen Priorität der Querstrecken BDT,BDT' wird bei deren Aktivierung seitens der Lokalvermittlungen LPS,LPS' automatisch die den Stellencode 12 der Vorfeldeinrichtung VFR betreffende Signalisierung auf die Querstrecken BDT,BDT' umgeschaltet.

Bei der Wiederherstellung des Normalbetriebes wird umgekehrt die Nachrichtenübertragungseinrichtung MTE wieder in den Bereitschaftszustand versetzt, und die Querstrecken BDT,BDT' werden deaktiviert. Dadurch sind die Signalisierungswege zur Mutterstelle HST mit dem Stellencode 12 nicht mehr "überdeckt", und die korrespondierende Signalisierung der Lokalvermittlungen LPS,LPS' wird wieder der Muttervermittlung HST zugeleitet, die im Sinne des Normalbetriebs die entsprechenden Vermittlungsaufgaben mit der Vorfeldeinrichtung VFR über die Anschlußverbindung RST durchführt.

Auf diese Weise können auch im Fall einer Steuerungsstörung die Vermittlungsaufgaben für die Endanschlüsse EAS der Vorfeldeinrichtung VFR in einem selbständigen Betrieb der Vorfeldeinrichtung VFR gesteuert werden, wobei die Anbindung an andere Vermittlungsstellen nunmehr über die Querstrecken und die durch sie mit der Vorfeldeinrichtung VFR verbundenen Lokalvermittlungen LPS erfolgt.

Die Umschaltung gelingt aufgrund der Erfindung unabhängig davon, ob die Lokalvermittlung LPS eine eigenständige Vermittlungsstelle oder eine Vorfeldeinrichtung ist. Insbesondere erfolgt ein zuverlässiger Notbetrieb auch in dem besonderen Fall, daß eine Querstrecke BDT' zwischen zwei erfindungsgemäßen Vorfeldeinrichtungen VFR,VFR' gezogen ist und beide Vorfeldeinrichtungen, die einander als Lokalvermittlungen im Sinne der Erfindung dienen, die Verbindung zu ihrer jeweiligen Muttervermittlung HST,HST' verloren haben.

Bei einer Ausführungsvariante kann in der Nachrichtenübertragungseinrichtung MTE die oberste Ebene der funktionellen Architektur, nämlich die Ebene der sogenannten Signalisierungsnetzfunktionen ('signaling network functions'; "Ebene 3") gemäß den oben genannten ITU-Normen, mit einem verringerten Funktionensatz ausgerüstet sein. Im Sinne des oben Gesagten ist es für die Realisierung der Erfindung ausreichend, wenn der vorgesehene Funktionensatz die assoziierte Signalisierung über die F-Links FLN der Querstrecken gewährleistet. Die unter der Signalisierungsnetzebene liegenden Ebenen sind von der Erfindung nicht berührt und werden auch zur Durchführung der assoziierten Signalisierung im gesamten Umfang gebraucht. Diese Ebenen sind im übrigen im Falle des MTP des CCS7-Systems bekanntermaßen die Ebenen der sogenannten Signalisierungsverbindungsfunktionen ('signaling link functions'; "Ebene 2") und Signalisierungsübertragungsfunktionen ('signaling data link functions'; "Ebene 1").

Die Funktionen der Signalisierungsnetzebene können beispielsweise auf folgende Funktionen reduziert sein:
- Nachrichten-Diskrimination, d.h. der Empfang von Signalisierungsnachrichten und deren Überprüfung hinsichtlich des Ziel-Stellencodes,
- Zuweisung ('allocation') von Signalisierungsnachrichten zu den Querstrecken bzw. Signalisierungsverbindungen,
- Verwaltung der Signalisierungsverbindungen auf der untergeordneten Ebene, sowie
- in Abhängigkeit vom gewünschten Umfang Testfunktionen.

Durch diese Reduktion des Funktionenumfanges auf Seiten der Nachrichtenübertragungseinrichtung MTE kann der Aufwand hinsichtlich Ausrüstung, Implementation und Wartung der erfindungsgemäßen Vorfeldeinrichtung VFR deutlich reduziert werden.

## Patentansprüche

1. Verfahren zur Steuerung einer Vorfeldeinrichtung (VFR), welche zumindest im störungsfreien Betrieb über eine Anschlußverbindung (RST) an eine Muttervermittlung (HST) eines Telekommunikationsnetzes (TKN) als vorgeschaltete Einrichtung zur Anbindung von Endanschlüssen (EAS) des Netzes (TKN) angeschlossen ist und welche über zumindest eine Querstrecke (BDT) mit zumindest einer Lokalvermittlung (LPS) verbunden ist,
**mit folgenden Schritten**
dass im Falle einer Störung der Muttervermittlung (HST) und/oder der Anschlußverbindung (RST) seitens der Vorfeldeinrichtung (VFR) eine Nachrichtenübertragungseinrichtung (MTE) eines Zentralkanalsystems in Betrieb genommen wird und mit deren Hilfe
- Signalisierungsnachrichten mit der zumindest einen Lokalvermittlung (LPS) über zumindest eine Signalisierungsstrecke (FLN), welche jeweils in einer Querstrecke (BDT) vorgesehen ist, ausgetauscht werden und
- Vermittlungsaufgaben für die Endanschlüsse (EAS) der Vorfeldeinrichtung (VFR) gesteuert werden,
dass von der Vorfeldeinrichtung (VFR)
- aufgrund der Störung der Muttervermittlung (HST) und/oder der Anschlußverbindung (RST) die Nachrichtenübertragungseinrichtung (MTE) selbständig in Betrieb gesetzt wird,
- die den Querstrecken (BDT) zugeordneten Signalisierungsstrecken (FLN) für den Austausch von Signalisierungsnachrichten gemäß dem Protokoll des Zentralkanalsystems aktiviert werden, sowie
- für ihre Endanschlüsse (EAS) die Aufgaben einer Vermittlung mit einem eigenen Stellencode (SPC) gegenüber den über die zugehörenden Querstrecken verbundenen Lokalvermittlungen (LPS) ausgeführt werden,
dass aufgrund der Aktivierung einer Signalisierungsstrecke (FLN) zwischen der Vorfeldeinrichtung (VFR) und einer Lokalvermittlung (LPS) seitens der Lokalvermittlung (LPS) die den Stellencode der Vorfeldeinrichtung (VFR) betreffende Signalisierung auf die Querstrecke (BDT) umgeschaltet wird.

2. Verfahren nach Anspruche 1,
**dadurch gekennzeichnet, daß** seitens der Nachrichtenübertragungseinrichtung (MTE) ein verringerter Funktionensatz der Signalisierungsnetzebene zur Durchführung assoziierter Signalisierung verwendet wird.

## Claims

1. Method for controlling a remote switching unit (VFR) which is connected at least during normal, trouble-free operation via a remote switch trunk (RST) to a parent exchange (HST) of a telecommunications network (TKN) as a front-end device for connecting end terminals (EAS) of said network (TKN) and which is also connected to at least one local exchange (LPS) by way of at least one backdoor trunk (BDT),
**comprising the following steps**
in the event of a malfunction of the parent exchange (HST) and/or the remote switch trunk (RST) a message transfer device (MTE) of a common channel system is activated on the part of the remote switching unit (VFR) and with its help
- signalling messages are exchanged with the at least one local exchange (LPS) via at least one signalling link (FLN) which is provided in each case in a backdoor trunk (BDT) and
- switching functions for the end terminals (EAS) of the remote switching unit (VFR) are controlled,
the remote switching unit (VFR)
- autonomously activates the message transfer device (MTE) due to the malfunction of the parent exchange (HST) and/or the remote switch trunk (RST),
- activates the signalling links (FLN) assigned to the backdoor trunks (BDT) for the purpose of exchanging signalling messages in accordance with the protocol of the common channel system, and
- performs the functions of an exchange with its own signalling point code (SPC) on behalf of its end terminals (EAS) with regard to the local exchanges (LPS) connected via the associated backdoor trunks,
due to the activation of a signalling link (FLN) between the remote switching unit (VFR) and a local exchange (LPS) the signalling relating to the signalling point code (SPC) of the remote switching unit (VFR) is switched over to the backdoor trunk (BDT) on the part of the local exchange (LPS).

2. Method according to claim 1,
**characterised in that** a reduced function set of the signalling network level is used on the part of the message transfer device (MTE) for performing associated signalling.

## Revendications

1. Procédé pour commander une unité de commutation distante (VFR), qui est raccordée au moins dans l'exploitation sans incident par un central de raccordement (RST) à un central directeur (HST) d'un réseau de télécommunication (TKN) en tant que dispositif branché en aval pour le rattachement des branchements terminaux (EAS) du réseau (TKN) et qui est relié par au moins un tronçon transversal (BDT) à au moins un central local (LPS),
comprenant les étapes suivantes,
dans le cas d'une perturbation du central directeur (HST) et/ou de la liaison de raccordement (RST), un dispositif de transmission de messages (MTE) d'un système de canal central est mis en service par l'unité de commutation distante (VFR) et avec son aide
- des messages de signalisation sont échangés avec le au moins un central local (LPS) au moyen d'au moins un tronçon de signalisation (FLN), qui est prévu à chaque fois dans un tronçon transversal (BDT), et
- des fonctions de commutation pour les branchements finaux (EAS) de l'unité de commutation distante (VFR) sont commandées,
l'unité de commutation distante (VFR)
- met en service de façon autonome le dispositif de transmission de messages (MTE) à la suite de la perturbation du central directeur (HST) et/ou de la liaison de rattachement (RST),
- active les tronçons de signalisation (FLN) attribués aux tronçons transversaux (BDT) pour l'échange de message signalisation selon le protocole du système de canal central,
- exécute pour ses branchements finaux (EAS) les fonctions d'un central avec un code de poste (SPC) propre vis-à-vis des centraux locaux (LPS) reliés par les tronçons transversaux correspondants,
à la suite de l'activation d'un tronçon de signalisation (FLN) entre l'unité de commutation distante (VFR) et un central local (LPS), le central local (LPS) commute la signalisation concernant le code de poste de l'unité de commutation distante (VFR) sur le tronçon transversal (BDT).

2. Procédé selon la revendication 1,
**caractérisé en ce que** le dispositif de transmission de messages (MTE) utilise un ensemble de fonction réduit du niveau du réseau de signalisation pour mettre en oeuvre la signalisation associée.
